# EUROPÄISCHE PATENTANMELDUNG

(11) **EP 2 026 456 A1**
(43) Veröffentlichungstag der Anmeldung: **18.02.2009**
(21) Anmeldenummer: 08012566.9
(22) Anmeldetag: 11.07.2008
(51) Int. Cl.: H02M 7/5387, H02M 3/156

(54) **Wechselrichter**

(30) Priorität: 14.08.2007 DE 102007038960
(71) Anmelder: SMA Solar Technology AG, 34266 Niestetal (DE)
(72) Erfinder: Zacharias, Peter, Prof. Dr., 34131 Kassel (DE); Friebe, Jens, 37176 Nörten-Harenberg (DE); Blumenstein, Felix, 37235 Hessisch Lichtenau (DE)
(74) Vertreter: Walther, Walther & Hinz GbR

(57) **Zusammenfassung**

Es wird ein Wechselrichter (1) zur Einspeisung elektrischer Energie in ein Energieversorgungsnetz (7) oder eine Last beschrieben. Der Wechselrichter (1) enthält Gleichspannungs-Eingänge (2, 3), einen an diese angeschlossenen, ersten Zwischenkreis (8), der zwei in Serie liegende Kondensatoren (C1, C2) aufweist, die an einem Erdanschluss (14) miteinander verbunden sind, zwei Wechselspannungs-Ausgänge (5, 6), von denen wenigstens einer mit einer Netzdrossel (L1) versehen ist, und einen Brückenzweig (10). Erfindungsgemäß enthält der Wechselrichter (1) lediglich zwei Schalter (S1, S2), die im Brückenzweig (10) angeordnet und hochfrequent zu schalten sind, sowie einem zwischen dem ersten Zwischenkreis (8) und dem Brückenzweig (10) einen zumindest zum wahlweisen Hoch- bzw. Tiefsetzen der Gleichspannung eingerichteten und zur Versorgung des Brückenzweigs (10) mit positiver und negativer Spannung bestimmten, zweiten Zwischenkreis (9), der einen internen Freilauf (D5, D6) zur Aufrechterhaltung von die Netzdrossel (L1) in entgegengesetzte Richtungen durchfließenden Strömen aufweist.

## Beschreibung

Die Erfindung betrifft einen Wechselrichter der im Oberbegriff des Anspruchs 1 angegebenen Gattung.

Zur Einspeisung elektrischer Energie, die mit Gleichspannungsgeneratoren wie z. B. Photovoltaik- oder Brennstoffzellenanlagen erzeugt wird, in ein Wechselstromnetz, insbesondere das öffentliche Energieversorgungsnetz (50/60 Hz), werden Wechselrichter der verschiedensten Art verwendet. Zwischen dem Gleichspannungsgenerator und dem Wechselrichter ist in den meisten Fällen ein Gleichspannungswandler (DC/DC-Steller) vorgesehen, der dem Zweck dient, die vom Gleichspannungsgenerator gelieferte Gleichspannung in eine vom Wechselrichter benötigte bzw. an diesen angepasste Gleichspannung umzuwandeln.

Aus verschiedenen Gründen ist es erwünscht, einen der Ausgänge des Gleichspannungsgenerators zu erden oder das Potential des Gleichspannungsgenerators gegenüber dem Erdpotential festzulegen. Der Grund hierfür besteht einerseits darin, dass es Länder gibt, in denen eine solche Erdung vorgeschrieben ist. Andererseits ergeben sich bei fehlender Erdung verschiedene Nachteile beim Betrieb. Hierzu zählt u. a. das Problem der hochfrequenten Ableitströme. Aufgrund von unvermeidbaren, parasitären Kapazitäten zwischen dem Gleichspannungsgenerator und Erde kann es bei Potentialschwankungen zu nicht unerheblichen Ausgleichsströmen kommen, die ein nicht tolerierbarers Sicherheitsrisiko darstellen, daher zum Berührungsschutz bzw. zur Herstellung der elektromagnetischen Verträglichkeit (EMV) aufwendige Überwachungsmaßnahmen mit Hilfe von Fehlerstromsensoren od. dgl. erforderlich machen und nur durch Erdung sicher vermieden werden können. Potentialschwankungen am Gleichspannungsgenerator können weiter bei bestimmten Solarmodulen wie z. B. Dünnschichtmodulen od. dgl. zu dauerhaften Zerstörungen führen.

Prinzipiell vermeiden lassen sich Ableitströme der beschriebenen Art ohne weiteres dann, wenn Gleichspannungswandler mit Transformatoren verwendet werden, die eine galvanische Trennung der Gleichspannungsseite von der Wechselspannungsseite herbeiführen. Transformatoren haben aber unabhängig davon, ob Netztransformatoren oder Hochfrequenztransformatoren verwendet werden, u. a. eine Reduzierung des Wirkungsgrades, zum Teil erhebliche Gewichte und Baugrößen und/oder einen zusätzlichen Regelungsaufwand zur Folge, weshalb grundsätzlich transformatorlose Spannungswandler bevorzugt werden. Die üblichen Topologien von transformatorlosen Gleichspannungswandiern machen jedoch die gewünschte Erdung entweder unmöglich, da dies zum Kurzschließen von benötigten Schaltern, Kapazitäten oder dgl. führen würde, oder haben einen erhöhten Schaltungsaufwand und andere Nachteile zur Folge.

Es sind daher bereits zahlreiche Versuche unternommen worden, das Auftreten der genannten Nachteile auf anderem Wege zu vermeiden. Insbesondere sind Schaltungen bekannt, die dem Zweck dienen, die unerwünschten Ableitströme zu reduzieren (z. B. DE 10 2004 037 466 A1, DE 102 21 592 A1, DE 10 2004 030 912 B3). In diesen Schaltungen wird z. B. ein Solargenerator in bestimmten Phasen des inneren elektrischen Energietransports vom Netz isoliert betrieben. Bei der periodischen erneuten elektrischen Verbindung des Solargenerators mit dem Netz werden dann dessen parasitäre Kapazitäten nur geringfügig umgeladen, so dass sich das Potential des Solargenerators mit Netzfrequenz, sinusförmig und bei einer Spannungsamplitude, die der halben Netzspannung entspricht, ändert. Hochfrequenzströme bilden sich dann durch die geringen Spannungsunterschiede des Solargenerators nur zwischen zwei Schalttakten sowie durch Unsymmetrien beim Schalten aus. Kapazitive Ableitströme lassen sich auf diese Weise zwar stark minimieren, aber prinzipiell nicht völlig vermeiden.

Weiterhin ist eine Schaltungsanordnung bekannt (DE 102 25 020 A1), die einen geteilten Solargenerator verwendet, dessen Mittelpunkt geerdet ist. Damit haben alle Teile des Solargenerators ein festes Potential, und kapazitive Ableitströme können prinzipiell nicht fließen. Da die beiden Gleichstromquellen unterschiedliche Ergiebigkeiten haben, ist außerdem eine Schaltung zur Kompensation der Leistungsdifferenzen und Spannungen vorgesehen. Nachteilig sind in diesem Schaltungsvorschlag die hohen Spannungsdifferenzen im Solargenerator und an den Schaltern, die zusätzlichen Verluste in der Kompensationsschaltung und der Umstand, dass mindestens vier hochfrequent getaktete Schalter benötigt werden.

Daneben sind auch bereits Schaltungsanordnungen bekannt, mit denen ein Solargenerator trotz Fehlens eines Transformators einseitig geerdet werden kann. Dadurch werden kapazitive Ableitströme prinzipbedingt verhindert. Eine dieser Schaltungsanordnungen (DE 196 42 522 C1) benötigt allerdings fünf aktive Schalter, wobei ein bzw. zwei Schalter gleichzeitig hochfrequent schalten und den mittleren Ausgangsstrom bereitstellen müssen. Bei dieser auch als "Flying Inductor" bezeichneten Schaltung wird daher der Wirkungsgrad durch die hohe Zahl der gleichzeitig in Serie am Stromfluss beteiligten Bauelemente beeinträchtigt. Nachteilig ist bei dieser Schaltung auch, dass lückende Strompulse in das Netz eingeprägt werden, die ein kapazitives Netzfilter erforderlich machen, das prinzipbedingt durch seinen eigenen Blindleistungsbedarf den Leistungsfaktor, aber auch den Wirkungsgrad der Schaltung im Teillastbereich verschlechtert. Ein derartiges kapazitives Netzfilter kann zwar mit einer anderen bekannten Schaltung vermieden werden (DE 197 32 218 C1), doch werden dazu neun aktive Schalter benötigt, von denen mindestens zwei gleichzeitig mit hohen Frequenzen geschaltet werden müssen, so dass der konstruktive Aufwand noch weiter erhöht und sowohl die Robustheit als auch der Wirkungsgrad der Gesamtvorrichtung negativ beeinflusst würde. Die Topologie eines Flying Inductor hat außerdem den Nachteil, dass die Spannungsbelastung der Schalter von der Netzspannung abhängt und sensibel gegenüber Netzstörungen ist.

Schließlich sind Vorrichtungen bekannt (US 2007/0047277 A1), die zweistufig ausgebildet sind und außer dem eigentlichen Wechselrichter (DC/AC-Wandler) einen Gleichspannungs- bzw. DC/DC-Wandler aufweisen. Die Wechselrichter sind mit einem bipolaren Spannungszwischenkreis versehen, der zwei in Serie liegende Kondensatoren enthält, die an einem dem Null- bzw. Neutralleiter des jeweiligen Netzes zugeordneten und mit diesem verbundenen Erdanschluss mit einander verbunden sind. Der Erdanschluss des Wechselrichters kann in diesem Fall außerdem mit dem negativen Ausgang des Gleichspannungsgenerators verbunden werden. Dies wird durch Anwendung einer speziellen Speicherdrossel ermöglicht, die aus zwei magnetisch gekoppelten Wicklungen zusammengesetzt ist.

Dem Vorteil, dass diese Vorrichtung mit vergleichsweise einfachen Mitteln, insbesondere ohne Transformator, eine Erdung des Gleichspannungsgenerators ermöglicht, steht der Nachteil gegenüber, dass sie mindestens drei aktive, hochfrequent getaktete Schalter benötigt und zweistufig ausgebildet ist, was den Steuerungs- und Regelungsaufwand erhöht, zu unvermeidbaren Verlusten führt und den Wirkungsgrad beeinträchtigt.

Ausgehend von diesem Stand der Technik besteht das technische Problem der Erfindung darin, den Wechselrichter der eingangs bezeichneten Gattung so auszubilden, dass eine Festlegung des Potentials des Gleichspannungsgenerators gegenüber dem Erdpotential nicht nur ebenfalls mit vergleichsweise einfachen konstruktiven Mitteln, sondern auch mit einer geringen Anzahl von Bauelementen und mit vergleichsweise geringen Belastungen der hochfrequent zu schaltenden Schalter realisiert werden kann.

Zur Lösung dieser Aufgabe dienen die kennzeichnenden Merkmale des Anspruchs 1.

Die Erfindung schlägt einen Wechselrichter in einstufiger Bauweise, d. h. einen Wechselrichter vor, in dem das DC/DC-Teil und das DC/AC-Teil zu einer kombinierten Schaltungsanordnung mit Hochsetz- und Tiefsetzmöglichkeit für die Eingangsspannung zusammengefasst sind. Dadurch wird eine gemeinsame Steuerung bzw. Regelung in einer einzigen Stufe ermöglicht. Außerdem wird ein Wechselrichter geschaffen, bei dem alle Funktionen mit nur zwei, hochfrequent zu schaltenden Schaltern erfüllt werden. Schließlich kann das Potential des Gleichspannungsgenerators gegenüber dem Erdpotential festgelegt werden und die Energieeinspeisung in das Netz mit einem nicht lückenden Strom erfolgen. Aufgrund der vergleichsweise geringen Anzahl von Bauelementen werden außerdem eine hohe Zuverlässigkeit und eine hohe Standzeit des Wechselrichters erzielt.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
- Fig. 1: das Schaltbild eines erfindungsgemäßen Wechselrichters mit für seine Funktion wesentlichen Schalter;
- Fig. 2 bis 4: den Betrieb des Wechselrichters nach Fig. 1 für positive Ausgangsspannung und positivem Ausgangsstrom mit drei unterschiedlichen Schaltzuständen der Schalter;
- Fig. 5: den Verlauf von Strömen, die sich beim Betrieb des Wechselrichters nach Fig. 1 an verschiedenen Stellen ergeben; und
- Fig. 6: einen analog zu Fig. 1 aufgebauten, jedoch dreiphasigen Wechselrichter.

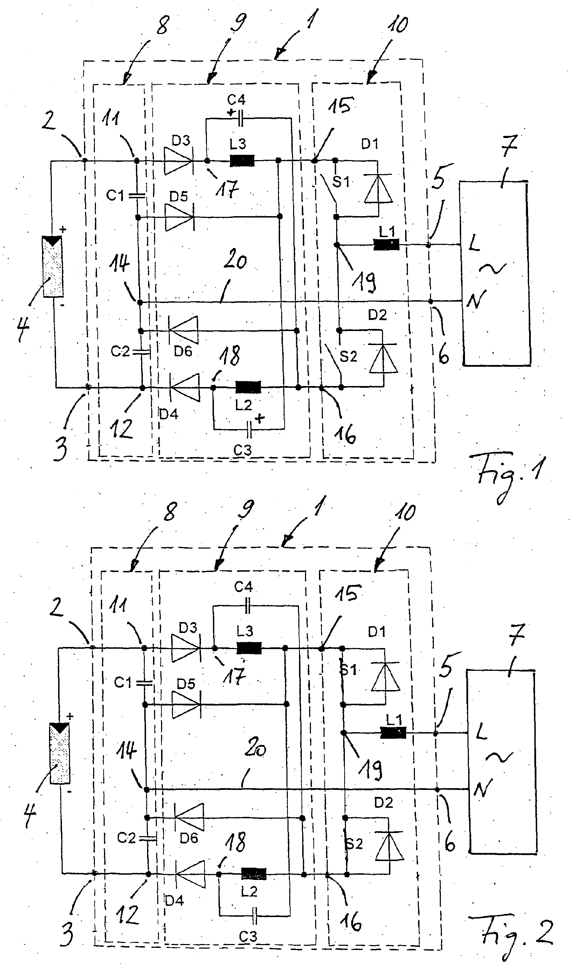

Nach Fig. 1 enthält ein erfindungsgemäßer, einphasiger Wechselrichter 1 zwei zum Anlegen einer Gleichspannung bestimmte Eingänge 2 (positiv) und 3 (negativ), die z. B. an die entsprechenden Ausgänge eines Gleichspannungsgenerators 4 in Form einer Photovoltaik- oder Brennstoffzellenanlage angeschlossen werden, wobei diesen Ausgängen wie üblich ein nicht dargestellter Kondensator parallel geschaltet sein kann.

Der Wechselrichter 1 enthält außerdem zwei Ausgänge 5 und 6, die zur Abgabe einer Wechselspannung und zum Anschluss z. B. an ein schematisch dargestelltes, einphasiges Energieversorgungsnetz 7 oder eine Last dienen. Wenigstens einem der Ausgänge ist eine Glättungs- bzw. Netzdrossel L1 vorgeschaltet, was im Ausführungsbeispiel für den Ausgang 5 zutrifft, der an die Phase L des Netzes 7 angeschlossen ist.

Im Gegensatz zu den meisten bekannten Schaltungsanordnungen ist zwischen dem Gleichspannungsgenerator 4 und dem Wechselrichter 1 kein zusätzlicher und separater DC/DC-Wandler angeordnet. Vielmehr wird erfindungsgemäß ein Wechselrichter vorgeschlagen, der gemäß Fig. 1 nicht nur eine DC/AC-Umwandlung vornimmt, sondern auch zum Hochsetzen oder Tiefsetzen der Eingangsspannung auf ein gewünschtes Niveau geeignet ist, d. h. auch die Eigenschaften DC/DC-Wandlers mit Hoch- und Tiefsetzfunktion besitzt. Beide Funktionen sind im erfindungsgemäßen Wechselrichter 1 vereinigt. Zu diesem Zweck weist der Wechselrichter 1 einen ersten Zwischenkreis 8, einen zweiten Zwischenkreis 9 und einen Brückenzweig 10 auf.

Der erste Zwischenkreis 8 ist mit den beiden Eingängen 2 und 3 verbunden und enthält zwei in Serie liegende-Kondensatoren C1 und C2, die mit ihren einen Anschlüssen 11, 12 an je einen Eingang 2 bzw. 3 angeschlossen und an ihren anderen Anschlüssen miteinander verbunden sind. Dieser Verbindungspunkt ist gleichzeitig ein auf Erdpotential zu legender Erdanschluss 14. Der Zwischenkreis 8 ist somit ein an sich bekannter, bipolarer Spannungs-Zwischenkreis, der so eingerichtet ist, dass der Brückenzweig 10 aus einer positiven Quelle C1 (oberer Anschluss 11 positiv gegen Erde) und einer negativen Quelle C2 (unterer Anschluss 12 negativ gegen Erde) gespeist werden kann. Durch die Erdung am Erdanschluss 14 und die Verwendung vergleichsweise großer Kapazitäten C1 und C2 wird außerdem erreicht, dass das Potential des Gleichspannungsgenerators 4 vergleichsweise konstant ist und selbst dann, wenn parasitäre Kapazitäten gegen Erde vorhanden sind, keine wesentlichen Streuströme erhalten werden.

Der zweite Zwischenkreis 9 enthält ein erstes Serienglied, bestehend aus einer ersten, an den Anschluss 11 angeschlossenen Diode D3 und einer mit dieser in Serie verbundenen ersten Speicherdrossel L3, sowie ein zweites Serienglied, bestehend aus einer zweiten, mit dem Anschluss 12 verbundenen Diode D4 und einer zweiten, mit dieser in Serie liegenden Speicherdrossel L2. Der andere Anschluss der Speicherdrossel L3 ist an einen ersten Eingang 15, der andere Anschluss der Speicherdrossel L2 an einen zweiten Eingang 16 des Brückenzweigs 10 angeschlossen. Außerdem enthält der zweite Zwischenkreis 9 einen Kondensator C4, der einerseits mit einem Verbindungspunkt 17 zwischen der Diode D3 und der Speicherdrossel L3 des ersten Seriengliedes und andererseits mit dem Eingang 16 verbunden ist, sowie einen Kondensator C3, der einerseits mit einem Verbindungspunkt 18 zwischen der Diode D4 und der Speicherdrossel L2 des zweiten Seriengliedes und andererseits mit dem Eingang 15 des Brückenzweigs 10 verbunden ist.

Der Brückenzweig 10 wird im Wesentlichen von zwei in Serie liegenden Schaltern S1 und S2 gebildet, die je einen ersten, mit dem Eingang 15 bzw. 16 verbundenen Anschluss und je einen zweiten Anschluss aufweisen. Die beiden zweiten Anschlüsse sind an einem zwischen den beiden Schaltern S1, S2 liegenden, gemeinsamen Verbindungspunkt 19 miteinander verbunden, der über die Netzdrossel L1 mit dem einen Ausgang 5 des Wechselrichters 1 verbunden ist und somit über die Netzdrossel L1 zur Phase L des Netzes 7 führt. Der Normalleiter N des Netzes 7 ist an den Ausgang 6 des Wechselrichters 1 und von dort über eine Leitung 20 an den Verbindungspunkt 14 zwischen den beiden Kondensatoren C1 und C2 angeschlossen und wird wie dieser Verbindungspunkt 14 auf Erdpotential gelegt.

Der zweite Zwischenkreis 9 weist im Ausführungsbeispiel ferner zwei Freilaufpfade auf, die von je einer weiteren Diode D5 bzw. D6 gebildet sind. Der Freilaufpfad mit der Diode D5 liegt zwischen dem Erdanschluss 14 und dem Eingang 15 des Brückenzweigs 10, wobei die Diode D5 in Richtung des Eingangs 15 leiten kann. Der zweite Freilaufpfad mit der Diode D6 liegt dagegen zwischen dem Erdanschluss 14 und dem anderen Eingang 16 des Brückenzweigs 10, doch kann hier die Diode D6 nur in entgegengesetzter Richtung, d. h. in Richtung des Verbindungspunkts 14 leitend gemacht werden. Außerdem zeigt Fig. 1, dass die Katode der Diode D5 und die Anode der Diode D6 mit dem Erdanschluss 14 verbunden ist.

Schließlich kann im Brückenzweig 10 jedem Schalter S1, S2 je eine Diode D1 bzw. D2 parallel geschaltet sein, wobei die Diode D1 in Richtung des Eingangs 15 und die Diode D2 entgegengesetzt dazu in Richtung des Verbindungspunkts 19 zwischen den beiden Schaltern S1, S2 leiten kann.

Die Schalter S1, S2 werden hochfrequent z. B. mit einer Frequenz von 16 kHz oder mehr, z. B. 100 kHz, umgeschaltet, d. h. abwechselnd in einen leitenden und einen nicht leitenden Zustand gebracht. Weitere Schalter werden in dem erfindungsgemäßen Wechselrichter 1 nicht benötigt.

Der Grundgedanke der Erfindung besteht insgesamt darin, zwei miteinander verbundene Zwischenkreise 8 und 9 vorzusehen. Der erste Zwischenkreis 8 ist eingangsseitig mit dem DC-Generator 4 verbunden und besteht im Wesentlichen nur aus einem Speicher, der als kapazitiver Spannungsteiler ausgebildet ist und dessen Verbindungspunkt 14 mit dem Erdpotential verbunden wird. Dadurch wird das Potential des DC-Generators 4 gegenüber dem Erdpotential festgelegt, und zwar vorzugsweise symmetrisch, indem C1 = C2 gewählt wird. Dagegen dient der zweite Zwischenkreis 9, wie weiter unten näher erläutert ist, zum einen zur Versorgung des Brückenzweigs 10 mit den erforderlichen elektrischen, gegenüber dem Erdpotential positiven bzw. negativen Spannungen, und zum anderen z. B. zum Hochsetzen der Ausgangsspannung des ersten Zwischenkreises 8 auf den für eine Netz- oder auch Lasteinspeisung erwünschten Wert, indem seine Ausgangsspannung durch Wahl des Verhältnisses, mit dem die beiden Schalter S1 und S2 gleichzeitig eingeschaltet werden, eingestellt wird. Der zweite Zwischenkreis 9 hat außerdem die Funktion, einen Freilaufpfad für den die Netzdrossel L1 durchfließenden Strom bereitzustellen.

Das alles wird durch eine integrierte Schaltungsanordnung erreicht, die mit nur zwei Schaltern auskommt, eine geringe Spannungsbelastung für die Schalter vorsieht und eine nicht lückende, kontinuierliche Einspeisung von Strom in das Netz 7 ermöglicht. Außerdem sind die Bauelemente D3, L3, C4, D5 einerseits und D4, L2, C3 und D6 andererseits vorzugsweise völlig symmetrisch ausgebildet, so dass für die Stromflüsse während der positiven und negativen Halbwellen identische Verhältnisse erhalten werden. Insgesamt wird somit erstmals ein Wechselrichter 1 erhalten, der insgesamt nur zwei Schalter S1, S2 aufweist, die hochfrequent geschaltet und vergleichsweise gering belastet werden.

Die Betriebsweise des beschriebenen Wechselrichters 1 wird nachfolgend anhand der Fig. 2 bis 5 für den Fall näher erläutert, dass eine positive Halbwelle vorliegt, d. h. eine positive Ausgangsspannung am Verbindungspunkt 17 anliegt und positiver Strom über die Netzdrossel L1 in das Netz 7 eingespeist wird.

Es sei zunächst angenommen, dass sich die beiden Schalter S1 und S2 im geöffneten Zustand befinden (Fig. 1). Es kommt dann nach einem kurzen Ausgleichsvorgang zu einem stationären Betriebszustand, sobald die beiden Kondensatoren, wenn C1 = C2 gilt, auf die halbe Generatorspannung und die Kondensatoren C3 und C4 über die Strompfade D3, C4, L2, D4 bzw. D3, L3, C3 und D4 auf die volle Generatorspannung aufgeladen sind. Es fließt jetzt kein Strom mehr durch die Speicherdrosseln L2 und L3, und in Fig. 1 hat der Kondensator C4 links und der Kondensator C3 rechts seine positive Seite.

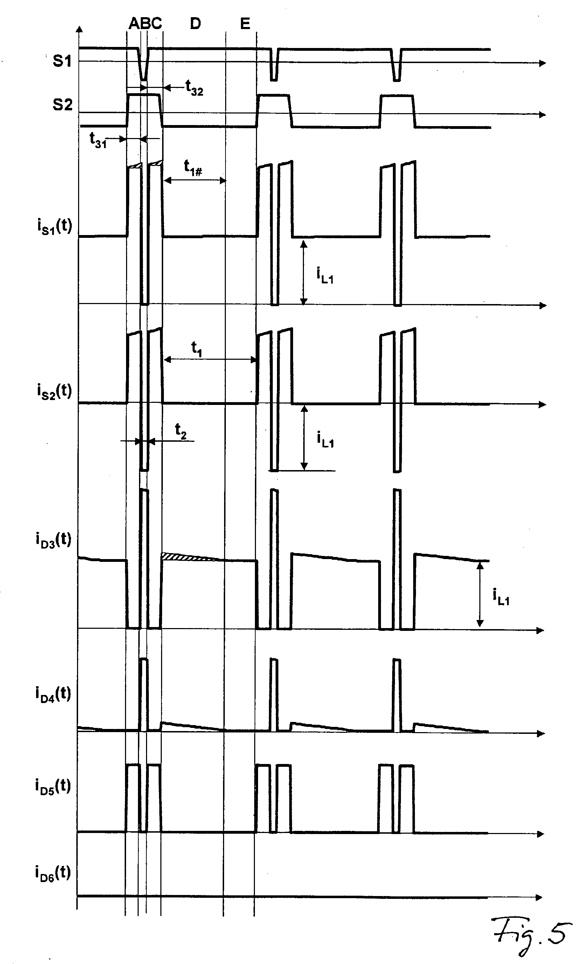

Zur Ermöglichung der Hochsetzfunktion werden die beiden Schalter S1 und S2 gleichzeitig (überlappt) eingeschaltet, wie in Fig. 2 und 5 für ein Zeitintervall t31 und eine Phase A dargestellt ist. Das Schließen der Schalter S1, S2 hat zur Folge, dass die Bauelemente C4 und L3 einerseits und C3, L2 andererseits parallel geschaltet bzw. kurzgeschlossen sind. Dadurch wird der Kondensator C4 über einen Strompfad von C4 über L3, S1, S2 und zurück zu C4 über die Speicherdrossel L3 entladen und gleichzeitig L3 entsprechend geladen. Außerdem wird der Kondensator C3 über einen Strompfad von C3 über S1, S2, L2 und zurück zu C3 entladen, wodurch die Speicherdrossel L2 geladen wird. Dadurch steigen entsprechend Fig. 5 die Ströme S1 und S2 allmählich an. Schließlich kann ein die Netzdrossel L1 in Richtung Netz 7 durchfließender Strom, der in einer vorhergehenden Phase in L1 erzeugt wurde, über einen durch die Diode D5 hindurch erzwungenen Freilaufpfad und zurück zu L1 weiter fließen, wobei er nicht über die Entkoppel- bzw. Koppeldioden D3, D4 fließen muss. Der beschriebene Freilauf D5 bzw. D6 wäre zwar beim Fehlen von L1, was grundsätzlich denkbar wäre, nicht erforderlich. Die Netzdrossel L1 hat jedoch den Vorteil, dass sie zur Glättung des in das Netz 7 zu liefernden Stroms beiträgt und ein übermäßiges Anwachsen dieses Stroms verhindert. Wie Fig. 5 weiter zeigt, führt die Phase A zu einem unterschiedlichen Anstieg der die Schalter S1, S2 durchfließenden Ströme, da nur S1 auch vom Freilaufstrom aus L1 durchflossen wird, während durch S2 nur die Umladeströme von C3, C4 in L3, L2 fließen. Eine Umkehr des Energieflusses im zweiten Zwischenkreis 9 wird durch die Sperrwirkung der Dioden D3 und D4 verhindert.

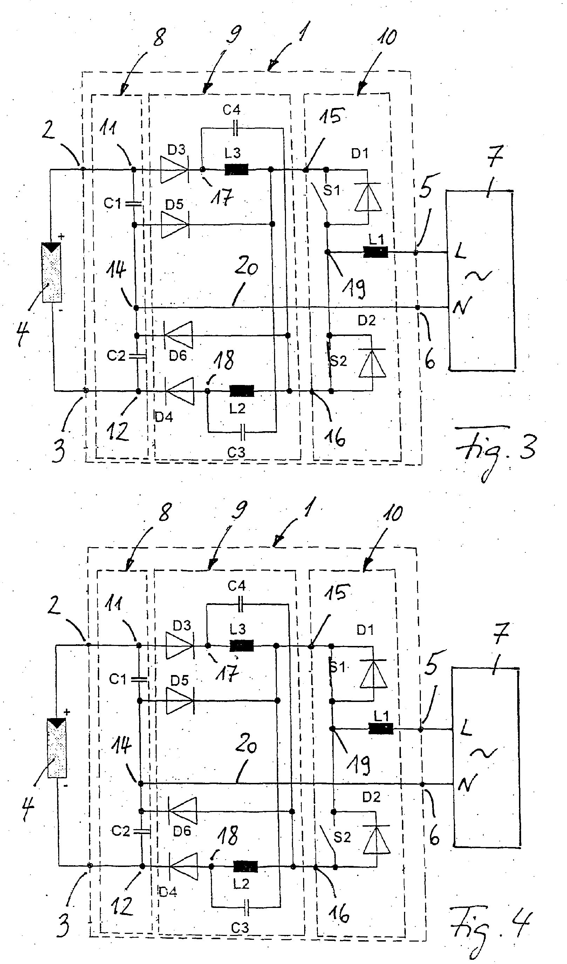

In einer nachfolgenden Phase B (Fig. 3 und 5) während eines Zeitintervalls t2 wird der Schalter S1 in den geöffneten Zustand gebracht, während der Schalter S2 weiterhin geschlossen bleibt. Dadurch wird an den Verbindungspunkt 19 des Wechselrichters 1 eine negative Spannung gelegt. Der in L1 fließende Strom kann jetzt nur über den Weg L1, 7, 20, 14, C1, D3, C4, S2, 19 und zurück zu L1 abgebaut werden, wobei dieser Strom in entgegengesetzter Richtung durch S2 fließt, wie Fig. 5 zeigt. Außerdem wird durch das Öffnen des Schalters S1 der Kurzschluss von S3, C4 bzw. L2, C3 aufgehoben, so dass jetzt die Speicherdrossel L2 die in ihr gespeicherte Energie über D4, C2, C1 und D3 an C4 und L3 die in ihr gespeicherte Energie über D4, C2, C1 und D3 an C4 überträgt. Allein mit den beiden Hochfrequenzschaltern S1, S2 kann somit ein Wechselrichter aufgebaut werden, der ohne Transformator aus einer Spannungsquelle, deren Ausgangsspannung größer oder kleiner als der Scheitelwert der Netzspannung ist, in das Netz 7 einspeisen kann.

Wie Fig. 5 zeigt, ist der in der Phase B durch D3 fließende Strom zusammengesetzt aus dem durch die Netzdrossel L1 fließenden, nahezu konstant bleibenden Strom und dem durch die Umladungen bewirkten Strom, während durch die Diode D4 nur der durch die Umladungen bewirkte Strom fließt.

In einer weiteren Phase C während des Zeitintervalls t32 wird der Schalter S1 wieder geschlossen (Fig. 2). Es ergeben sich jetzt dieselben Verhältnisse wie während der Phase A, was insbesondere Fig. 5 erkennen lässt.

An die Phase C schließt sich während eines ersten Teils t1* eines Zeitintervalls t1 eine Phase D an, in welcher gemäß Fig. 4 und 5 der Schalter S1 geschlossen, der Schalter S2 dagegen geöffnet ist. Dadurch liegt eine positive Spannung am Verbindungspunkt 19 des Brückenzweigs 10. Während dieser Phase erfolgt einerseits eine vom ersten Zwischenkreis 8 ausgehende Energieübertragung in das Netz 7, und zwar beginnend bei C1 über D3, L3, 15, S1, 19, L1, 7, 20 und zurück zu C1. Gleichzeitig geben die Speicherdrosseln L2, L3 die in ihnen gespeicherte Energie an die Kondensatoren C3, C4 ab (L3, C3, D4, C2, C1, D3 und zurück zu L3 bzw. L2, D4, C2, C1, D3, C4 und zurück zu L2). Demgemäß fließen in D3 und D4 bis zur vollständigen Entladung von L2 und L3 abnehmende Ströme, wobei der Strom D3 allerdings durch den über L1 an das Netz 7 gelieferten Strom erhöht ist, während D4 nur die Umladeströme führt.

In einer letzten Phase E, in der wie in Fig. 4 S1 geschlossen und S2 geöffnet bleibt und die sich über ein Zeitintervall t1 - t1* erstreckt, erfolgt dann nur noch eine Energieübertragung von C1 über D3 in das Netz 7 analog zur Phase D, während die Umladeströme zu Null geworden sind.

Während der Einspeisung eines negativen Stroms in das Netz während der negativen Halbwellen funktioniert der beschriebene Wechselrichter 1 im Wesentlichen genauso, wobei sich jedoch zu Fig. 2 bis 5 komplementäre Verhältnisse ergeben. Das bedeutet insbesondere, dass in der Phase B der Schalter S1 geschlossen gehalten und stattdessen der Schalter S2 geöffnet wird. Daher ist während der Phase C ein Freilaufpfad aktiv, der von L1 über S2, D6 und 7 zurück zu C2 führt. Dagegen erfolgt die Energieübertragung in das Netz 7 während der Phasen D und E, ausgehend von C2, über 7, L1, S2, L2, D4 und zurück zu C2.

Auch während der negativen Halbwellen werden die Kondensatoren C3, C4 durch die hohen Schaltfrequenzen und ein vorgewähltes, den Hochsetzgrad bestimmendes Tastverhältnis auf einen vorgewählten Wert hochgesetzt. Theoretisch würde die Spannung C3 und C4 sowohl während der positiven als auch während der negativen Halbwellen immer mehr ansteigen. Da jedoch durch die Einspeisung von Energie in das Netz 7 oder eine ohmsche Last den Kondensatoren C3, C4 ständig Energie wieder entzogen wird, wird ein Anstieg der Spannungen an C3, C4 über einen vorgewählten Wert hinaus verhindert.

Abgesehen davon ist die Speicherdrossel L3 während der positiven Halbwellen und die Speicherdrossel C2 während der negativen Halbwellen stärker belastet.

Insgesamt wird somit ein Wechselrichter 1 erhalten, der ohne einen üblichen DC/DC-Wandler und mit nur zwei Hochfrequenzschaltern S1, S2 eine in weiten Grenzen veränderbare Ausgangsspannung abgeben kann. Die Hochsetzfunktion wird dabei durch Umladungen der magnetischen Speicher L2, L3 und der kapazitiven Speicher C3, C4 und im Wesentlichen dadurch erreicht, dass die bei geschlossenen Schaltern S1 und S2 in den Speicherdrosseln L2, L3 gespeicherte Energie durch Öffnung wenigstens eines der beiden Schalter S1, S2 an die Kondensatoren C1, C4 abgegeben wird, um diese auf eine im Vergleich zur Eingangsspannung höhere Zwischenkreisspannung aufzuladen.

Die Erzeugung der Steuersignale für die Schalter S1, S2 während der aus Fig. 5 ersichtlichen Zeitspannen t31, t2, t32 und t1 erfolgt zweckmäßig mit den üblichen, bei PWM-Steuerungen angewendeten Mitteln mit dem Ziel, den Ausgangsstrom des Wechselrichters 1 möglichst gut an eine Sinusform anzunähern. Hierzu kann beispielsweise ein Vergleich eines Referenzsignals in Form eines Dreieck- oder Sägezahnsignals mit einem Sollwertsignal vorgenommen werden, wobei das Referenzsignal separat für jede Polarität der Ausgangsspannung generiert wird.

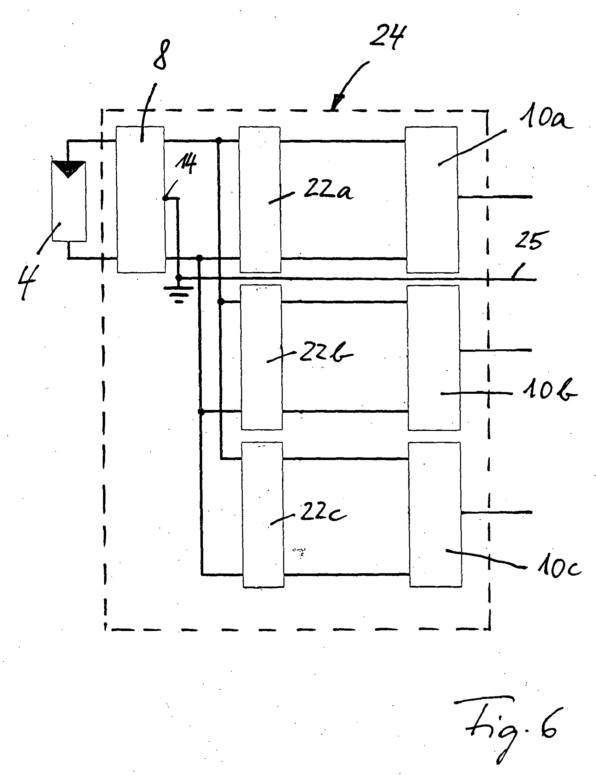

Fig. 6 zeigt schematisch den Aufbau eines dreiphasigen Wechselrichters 24. Dieser Aufbau wird dadurch erhalten, dass für jede Phase des Netzes 7 ein separater zweiter Zwischenkreis 22a, 22b und 22c vorgesehen wird, der gemäß Fig. 1 mit je einer internen Freilaufdiode versehen ist. Außerdem ist an jeden zweiten Zwischenkreis 22a, 22b und 22c ein entsprechend Fig. 1 ausgebildeter Brückenzweig 10a, 10b und 10c angeschlossen, der eine der drei Phasen des Netzes mit Strom versorgt. Eine Leitung 25 führt vom Verbindungspunkt 14 zum Nullleiter des hier nicht dargestellten Netzes 7.

Die Erfindung ist nicht auf die beschriebenen Ausführungsbeispiele beschränkt, die in vielfacher Weise abgewandelt werden können. Insbesondere ist klar, dass in der obigen Beschreibung nur die zum Verständnis der Erfindung erforderlichen Bauelemente beschrieben wurden und insbesondere die erforderlichen und an sich bekannten Steuerorgane, MPP-Regelungen usw. zusätzlich vorhanden sein können. Außerdem versteht sich, dass die verschiedenen Bauelemente auch in anderen als den beschriebenen und dargestellten Kombinationen angewendet werden können.

## Patentansprüche

1. Wechselrichter zur Einspeisung elektrischer Energie in ein Energieversorgungsnetz (7) oder eine Last, enthaltend zwei zum Anlegen einer Gleichspannung bestimmte Eingänge (2, 3), einen an diese angeschlossenen, ersten Zwischenkreis (8), der zwei in Serie liegende Kondensatoren (C1, C2) aufweist, die an einem Erdanschluss (14) miteinander verbunden sind, zwei zur Abgabe einer Wechselspannung bestimmte Ausgänge (5, 6), von denen wenigstens einer mit einer Netzdrossel (L1) versehen ist, und einen zur Umwandlung der Gleichspannung in die Wechselspannung bestimmten Brückenzweig (10),
**dadurch gekennzeichnet,**
**dass** er lediglich zwei Schalter (S1, S2) aufweist, die im Brückenzweig (10) angeordnet und hochfrequent zu schalten sind, und dass zwischen dem ersten Zwischenkreis (8) und dem Brückenzweig (10) ein zumindest zum wahlweisen Hochsetzen der Gleichspannung eingerichteter und zur Versorgung des Brückenzweigs (10) mit positiver und negativer Spannung bestimmter, zweiter Zwischenkreis (9) angeordnet ist, der einen internen Freilauf zur Aufrechterhaltung von die Netzdrossel (L1) in entgegengesetzte Richtungen durchfließenden Strömen enthält.

2. Wechselrichter nach Anspruch 1,
**dadurch gekennzeichnet,**
**dass** der Brückenzweig (10) als Halbbrücke ausgebildet ist, wobei die beiden Schalter (S1, S2) in Serie verbunden, mit ersten Anschlüssen (15, 16) parallel zum ersten Zwischenkreis (8) angeschlossen und mit zweiten Anschlüssen mit einem gemeinsamen Verbindungspunkt (19) verbunden sind, wobei dieser Verbindungspunkt (19) mit dem einen Ausgang (5) und der Verbindungspunkt (14) zwischen den beiden Kondensatoren (C1, C2) mit dem anderen Ausgang (6) verbunden ist.

3. Wechselrichter nach Anspruch 1 oder 2,
**dadurch gekennzeichnet,**
**dass** der zweite Zwischenkreis (9) zwei durch Dioden (D5, D6) gebildete Freilaufpfade enthält.

4. Wechselrichter nach Anspruch 3,
**dadurch gekennzeichnet,**
**dass** die eine der beiden Dioden (D5) zwischen den Erdanschluss (14) und einen ersten Anschluss (15) eines der beiden Schalter (S1) und die andere der beiden Dioden (D6) zwischen den Erdanschluss (14) und einen ersten Anschluss (16) des anderen der beiden Schalter (S2) geschaltet ist und beide Dioden (D5, D6) in entgegengesetzte Richtungen leitend sind.

5. Wechselrichter nach einem der Ansprüche 1 bis 4,
**dadurch gekennzeichnet,**
**dass** der zweite Zwischenkreis (9) ein erstes und ein zweites Serienglied enthält, das eine Diode (D3, D4) und eine mit dieser in Serie liegende Speicherdrossel (L3, L2) aufweist, wobei das erste Serienglied (D3, L3) vom einen Eingang (11) zu dem ersten Anschluss (15) eines der beiden Schalter (S1) und über einen dritten Kondensator (C3) zu einem Verbindungspunkt (18) zwischen der Speicherdrossel (L2) und der Diode (D4) des zweiten Seriengliedes führt, während das zweite Serienglied (D4, L2) vom anderen Eingang (12) zu dem ersten Anschluss (16) des anderen der beiden Schalter (S2) und über einen vierten Kondensator (C4) zu einem Verbindungspunkt (17) zwischen der Speicherdrossel (L3) und der Diode (D3) des ersten Seriengliedes führt.

6. Wechselrichter nach Anspruch 5,
**dadurch gekennzeichnet,**
**dass** die beiden Serienglieder (D3, L3; D4, L2) einerseits und die zugehörigen Kondensatoren (C3, C4) andererseits baugleich ausgebildet sind.

7. Wechselrichter nach einem der Ansprüche 1 bis 6,
**dadurch gekennzeichnet,**
**dass** er zum Anschluss an ein dreiphasiges Netz eingerichtet ist und drei parallele, an den ersten Zwischenkreis (8) angeschlossene, je einer Phase des Netzes zugeordnete, zweite Zwischenkreise (22a, 22b, 22c) und mit diesen verbundene Brückenzweige (10a, 10b, 10c) aufweist.
